# EUROPEAN PATENT SPECIFICATION

(11) **EP 0 428 368 B1**
(45) Date of publication and mention of the grant of the patent: **04.01.1995**
(21) Application number: 90312348.7
(22) Date of filing: 13.11.1990
(51) Int. Cl.: F16L 11/127

(54) **Fuel supplying hosepipe**
Kraftstoffzufuhrschlauch
Tuyau souple pour carburant

(30) Priority: 14.11.1989 JP 293892/89
(43) Date of publication of application: 22.05.1991
(73) Proprietor: TOKYO TATSUNO COMPANY LIMITED, Minato-ku Tokyo (JP)
(72) Inventor: Kobayashi, Kenji, c/o Tokyo Tatsuno Co., Ltd., Tokyo (JP); Kanamori, Akifumi, c/o Tokyo Tatsuno Co., Ltd., Tokyo (JP)
(74) Representative: Quest, Barry

(56) References cited:
- CH-A- 323 095
- GB-A- 2 156 033
- US-A- 3 797 703
- US-A- 4 303 457

## Description

### BACKGROUND OF THE INVENTION

The invention relates to a fuel supplying hosepipe used e.g. in a gasoline station and adapted to readily fix an extended line or lines, such as an electric wire, a string for actuating switch and the like, therealong and readily remove therefrom.

The flexible hosepipe referred to above has one end which is connected, in a stand post installed on a so-called island in the gasoline station site or in a casing mounted overhead e.g. on a ceiling or beam as a part of the gasoline station building structure, to a rigid conduit extending from a fuel reservoir generally located in the underground, while the other free end is mounted with a trigger nozzle.

In the latter case, there is provided a motor driven drum in the casing, around which the flexible hosepipe may be wound so as to fall down for fuelling or rise up so as not hinder movement of persons and vehicles on the narrow site. The lower end of the hosepipe where the nozzle gun is mounted must be kept normally at a level a little above the person's head (waiting position). For the purpose of lowering the nozzle in order to supply fuel to the vehicle, usually a string is hung down so that when pulling the string down a switch is actuated to energize the motor so as to drive the drum in such a direction as to lower the nozzle down to the fuelling position, and when fuel supply is over, a second switch is directly actuated so as to raise the hosepipe and consequently the nozzle up to the waiting position. Generally a switch box for the two switches referred to above is mounted on the hosepipe just above the nozzle.

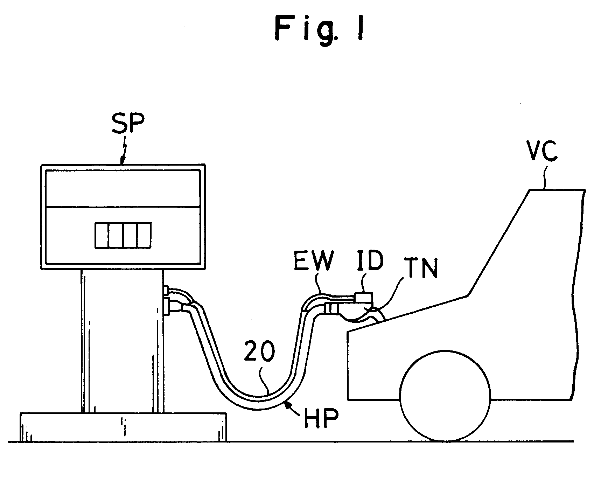

Meanwhile, there is naturally installed an indicator, as per each one set of fuelling device for displaying a quantity of fuel supplied, which is determined by a flowmeter which generates a signal for actuating the indicator. Such indicator is usually located overhead so as to be readily watched by customers. Accordingly it is often difficult for the operator to just correctly supply fuel in the ordered amount. In U.S. Patent 3,797,703, there is an explanation "...the service station operator must perform the work of supplying the required full quantity as he looks away and up from the dispensing nozzle he is holding to read the indicator. In an extremely difficult condition depending on the direction of parking of the automobile to be fuel led, the operator must carry out the work of supplying the fuel until the quantity thereof ordered by the customer is reached as the operator turns around and gazes upward toward the indicator." and proposed to provide a second and small size of indicator mounted on the nozzle or on the hosepipe just above the nozzle. In this case it is necessary as a matter of course to extend an electric wire from the flowmeter to the second indicator for the signal actuating thereof along the fuelling hosepipe. The electric wire therefore is extended along and in the hosepipe as readily appreciated by glancing at Fig. 1 of the Patent. This wire, however, affects adversely on smooth flow of fuel in the hosepipe. Above all it is difficult and troublesome to pass the wire through the hosepipe and electrically connect it at the end thereof with the indicator arranged outside of the hosepipe. When it is necessary to exchange the wire e.g. by reason of disconnection or for the purpose of inspection, the old wire must be pulled out, before which the nozzle must be disengaged from the hosepipe and/or the hosepipe must be disconnected from the rigid pipeline, which must be repeated in the reverse direction when electric connection has been established.

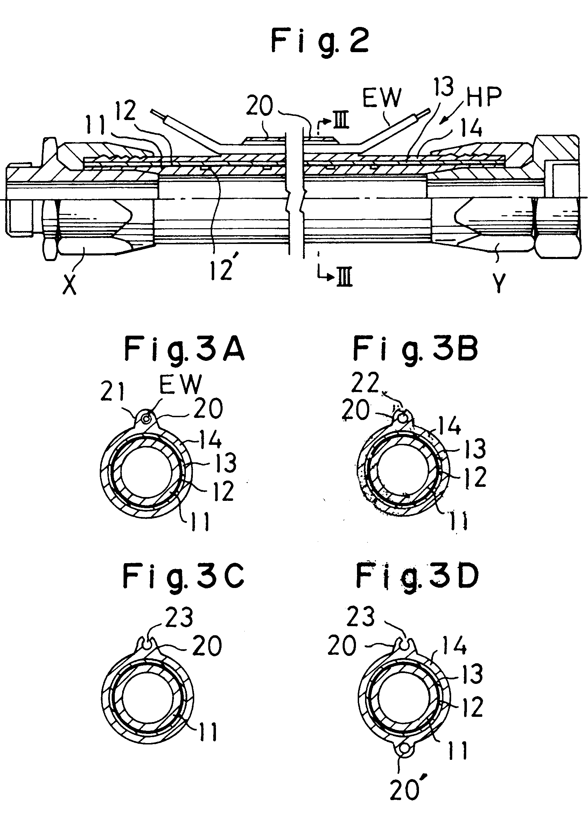

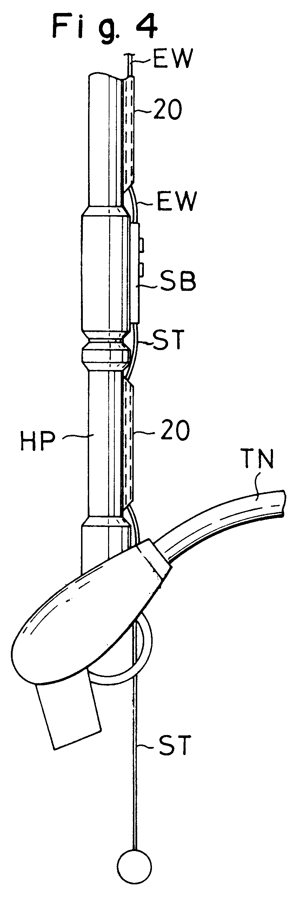

Meanwhile, U.S. Patent 4,595,122 proposes a fuel supplying system which comprises a first circuit for discriminating whether a previous fuel supplying operation is carried out in a normal fuel supplying mode or a preset fuel supplying mode, and for storing a discriminated fuel supplying mode of the previous fuel supplying operation, a second circuit for discriminating whether a present fuel supplying operation is carried out in the normal fuel supplying mode or the preset fuel supplying mode, and for storing a discriminated fuel supplying mode of the present fuel supplying operation, a third circuit for counting a flow quantity signal generated from a flowmeter when a fuel flows through the flowmeter so as to fill a fuel supplying hose before a valve of the fuel supplying nozzle is opened upon starting of the present fuel supplying operation, and for storing a counted value as a correcting quantity, and a fourth circuit for reading out the correcting quantity stored in the third circuit depending on the previous fuel supplying mode and the present fuel supplying mode which are stored in the respective first and second circuits, and for correcting a fuel supplying quantity of the present fuel supplying operation according to the previous fuel supplying mode, and which illustrates a switch box having three switches and mounted on the hosepipe just above the nozzle in Fig. 2, in which an electric wire is helically wound around the hosepipe to be extended therealong.

This helically wound wire is apt to be soon damaged when the hosepipe is wound around the drum or drawn out thereof repeatedly. Furthermore, the spiral wire often twines about a hand of the operator and the like when the operator is flourishing the nozzle. At least manipulativeness of the hosepipe having such spiral wires wound therearound is bad.

Further, in blender dispensers, two hosepipes for feeding two sorts of fuel to be blended to a dispenser nozzle are used and connected side by side with each other at several portions by a corresponding number of suitable binders, such as bands. Also, in case where a fuel dispensing apparatus is equipped with a device for collecting vapor of fuel in, for instance, a fuel tank so as to send it back to a reservoir, two hosepipes, one for suctioning the vapor and the other for feeding the fuel, are used and connected with each other like the above. Such bands are, however, apt to come loose or untied and the two hosepipes combined thereby are not good in the appearance.

US-A 4303457 describes a composite reinforced hose for conveying paint under pressure. The hose has a core tube simultaneously co-extruded from two or more thermoplastic synthetic polymers. The inner layer of the core tube is non-conductive and the outer layer is electrically conductive and serves as a ground for static electricity.

CH-A 323095 illustrates electrically isolated thermoplastic pipelines having electrically conductive wires extending through and parallel to the pipelines.

### SUMMARY OF THE INVENTION

It is an object of the invention, thus, to provide a hosepipe of the art as referred to above, which will not bring the defects mentioned in the above. The object may be attained fundamentally by forming a longitudinally extended hollow rib along and integrated with the hosepipe so as to receive an extended line therein.

Another object of the invention is to provide double hosepipes readily assembled by engaging the hollow ribs together.

### BRIEF DESCRIPTION OF THE DRAWINGS

Fig. 1 is a sketch for giving the fundamental concept of the hosepipe according to the invention,
Fig. 2 is a longitudinal side view of the hosepipe, partly in section, with cutting off a middle portion thereof in which an electric wire is extended through a groove of the rib,
Fig. 3A is a section taken along a line III-III in Fig. 2,
Figs. 3B, 3C and 3D are similar views showing other patterns of the hollow ribs,
Fig. 4 is a side elevation of the hosepipe mounted with a trigger nozzle at the lower end and a switch box, in which an electric wire extended through the hollow rib is electrically connected with the switch box and a string is extended through the hollow rib so as to actuate a concerned switch by pulling thereof,
Fig. 5 is a longitudinal section of a part of the two hosepipes having respectively hollow ribs which are connected with each other by means of an extended connector web,
Fig. 6 is a section taken along a line VI-VI in Fig. 5, and
Fig. 7 is a perspective view of the extended connector web for readily connecting the hollow ribs and consequently the two hosepipes together.

### DETAILED DESCRIPTION OF PREFERRED EMBODIMENTS

Fig. 1 shows a concept of the invention so as to help understanding the technical meaning thereof, in which a stand post SP installed in the gasoline station, which comprises an indicator for displaying an amount of a supplied fuel and a connector fitting to which a hosepipe HP is connected, which has a trigger nozzle TN mounted at the free end thereof for supplying fuel to a vehicle VC. The nozzle gun TN is provided with a second indicator ID of a small size for the service station operator to readily confirm the fuel amount to be supplied. An electric wire EW is attached on and along the hosepipe HP, according to the invention, for carrying a signal from a flowmeter not shown but generally mounted in the casing of the stand post SP to the second indicator ID. The invention may be applied, of course, to another type of fuelling system in which the hosepipe HP is wound around a drum mounted in a casing, which is arranged overhead, to be drawn down by drivingly rotating the drum.

Now in reference to Fig. 2, the hosepipe HP for fuelling has generally connector fittings X, Y at the opposite ends thereof, one X for connecting the hosepipe HP to a rigid conduit (not shown) extending from a fuel reservoir (not shown), while the other Y is for the nozzle gun. In reference also to Figs. 3A to 3D which are transverse sections taken along a line III-III in Fig. 2, the hosepipe HP is usually made of an inner layer 11 of an oil proof rubber, a reinforcement layer 12 of woven synthetic fibers and a spirally wound metallic wire or metallic textile web 12′ which serves as an earth, a middle layer 13 of weatherproof rubber and a coating or cover layer 14 of a thermoplastic elastomer.

When the outer coating layer 14 is formed, an extended hollow rib 20 is formed integrally with the layer 14 according to the invention. The end portions of the hollow ribs 20 in a piece of hosepipe HP are cut off when the hosepipe is connected to the connector fittings X and Y or other connector fittings.

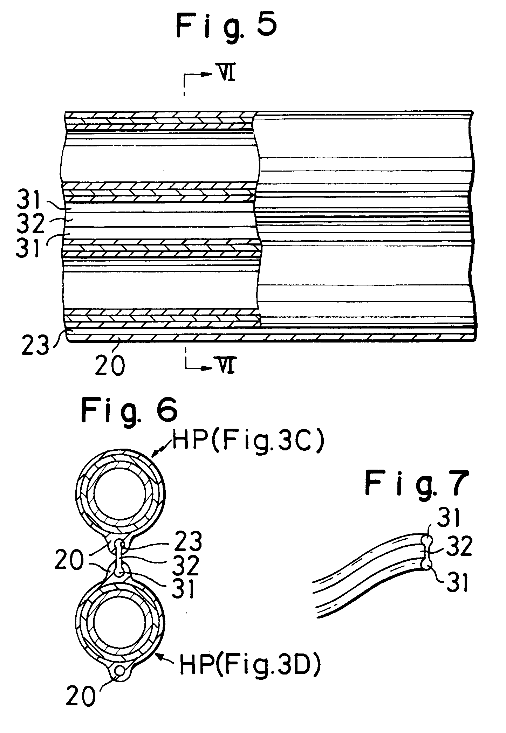

According to the first embodiment of the invention, the extended rib 20 is formed with a longitudinally extended central groove 21 for an extended line such as an electric wire, a string for actuating a switch and the like as shown best in Fig. 3.

Fig. 4 shows the hosepipe HP provided with the trigger nozzle TN at the free end thereof, and a switch box SB having a switch (not shown) for actuating a motor for drivingly rotating the drum around which the hosepipe is wound. The hosepipe HP is formed with the hollow rib 20 extended therealong of the first embodiment (Fig. 3A). The electric wire EW is extended upward through the central groove 21 from the switch box SB and a string ST is extended downward through the central groove 21 from the concerned switch in the box SB so that when pulling the string ST hung down from the free end of the hosepipe, the concerned switch is actuated and the motor is energized thereby to drive the drum for rotation, whereby the hosepipe HP is drawn out thereof from the waiting position to the fuelling position.

In this embodiment, the electric wire EW must be inserted in and along the longitudinally extended groove 21 but readily connected with the switches in the box SB mounted on a connector fitting for the hosepipe. Since the electric wire EW is completely contained in the rib, the defects of the prior art may be avoided and overcome. When the electric wire EW must be removed from the hosepipe, it is very simple to remove the switch box from the hospipe and pull down the electric wire EW together therewith.

In reference to Fig. 3B showing the second embodiment, the longitudinally extended rib 20 is formed with an extended notch 22 on and along the rib 20 so that the notch 22 may be readily cut by a cutter or blade not shown as occasion demands.

Fig. 3C shows the third embodiment in which the rib 20 is formed with not the central groove 21 but an open channel or ditch 23. Since the rib 20 is made of a thermoplastic elastomer and formed together with the outer layer 14, when the extended line such as the electric wire can be pushed in and along the channel 23 with deforming the extended side walls of the rib 20 and firmly held thereby owing to elasticity thereof.

Fig. 3D shows the fourth embodiment, in which two ribs 20, 20′ are oppositely formed so that two extended lines such as the electric wires may be intergrally fixed along the hosepipe. Such two hosepipes or such one hosepipe and a hosepipe having only one rib e.g. shown in Fig. 3C or Fig. 3B are readily connected together with each other for the purpose to be referred to later in reference to Figs. 5, 6 and 7.

It is sometimes required to supply two sorts of fuel, for the purpose of which two hosepipes must be combined together so that the different fuels are blended in a tank of the vehicle. Further, it is sometimes carried out to collect vapor of the fuel filled in the fuel tank of a automobile to send it back to the fuel reservoir, and two hosepipes, one for suctioning the vapor and the other for feeding the fuel, are used and combined together likewise.

Said two hosepipes referred to above have been united e.g. by means of a plurality of bands at a corresponding number of portions along the hosepipe. Such bands are, however, apt to come loose or untied and the two conduits combined thereby are not good in the manipulativeness and the appearance.

The two hosepipes respectively formed with the extended rib according to the invention may be readily combined together as shown in Figs. 5 and 6 by using an extended connector web e.g. shown in Fig. 7. The web made of a flexible material such as a thermoplastic polymer has a pair of thin rod portions 31, 31 and an extended web portion 32 connecting the rod portions together which are preferably formed e.g. by extruding the material through a die having a correspondingly shaped slit. The diameter of the rod portion 31 must be such as snugly fit in the longitudinal slit 23. It is possible of course to apply an adhesive to permanently fix the rod portion of the connector in the slit of the rib.

## Claims

1. A fuel supplying hosepipe comprising an inner layer (11) of oil proof rubber forming a tubular member, a reinforcement layer (12) of woven fibers located on said inner layer, a metallic textile web (12') as grounding means located between said inner layer and said reinforcement layer, a middle layer (13) of weatherproof rubber located on said reinforcement layer, and an outer coating layer (14) of thermoplastic elastomer located on said middle layer, the outer coating layer (14) being formed of an extended hollow rib (20) in which a longitudinally extended central groove (21) is provided for receiving an electric wire (EW), characterized in that the both end portions of the hollow rib (20) are cut off to provide circular profile portions in the both ends of the hosepipe to each of which a connector fitting (X or Y) is attached so as to connect the connector fittings to the grounding means (12').

2. The hosepipe as set forth in Claim 1, the hollow rib is formed integral with the outer layer from a thermoplastic elastomer.

3. The hosepipe as set forth in Claim 1, in which the hollow rib has an extended central groove.

4. The hosepipe as set forth in Claim 1, in which the hollow rib has an extended slit so as to form an open channel extended therealong and so that the extended line such as an electric wire may be fitted therein through the slit.

5. The hosepipe as set forth in Claim 3, in which the hollow rib is formed with a notch extended on and along the rib so that the extended notch may be readily cut open by a cutter as occasion demands so as to form an extended open channel.

6. The hosepipe as set forth in any one of Claims 1 to 5, which is formed with a pair of hollow ribs oppositely extended respectively therealong, one of which has an extended slit so as to form an open channel extended therealong for connecting another hosepipe, which is formed with at least one similar rib, together by means of an extended connector having two extended rod portions and a web portion coupling the rod portions in such a way that each of said rod portions is inserted in and along the hollow rib through the slit.

7. The hosepipe as set forth in any one of Claims 1 to 6, in which a part of the hollow ribs is cut off from the hosepipe at end portions of the latter at which the hosepipe is connected to connector fittings.

## Patentansprüche

1. Kraftstoffzufuhrschlauch mit einer einen Schlauch bildenden inneren Schicht (11) aus ölbeständigem Gummi, einer Verstärkungsschicht (12) aus gewebten Fasern, die auf der inneren Schicht angeordnet ist, einem als Erdung dienenden metallischen Textilgewebe (12'), das zwischen der inneren und der Verstärkungsschicht angeordnet ist, einer mittleren Schicht (13) aus witterungsbeständigem Gummi, die auf der Verstärkungsschicht angeordnet ist, und einer äußeren Überzugsschicht (14) aus thermoplastischem Elastomer, die auf der mittleren Schicht angeordnet ist, wobei die äußere Überzugsschicht (14) eine langgestreckte Hohlrippe (20) aufweist, in der eine sich in Längsrichtung erstreckende Mittelrille (21) zur Aufnahme eines elektrischen Kabels (EW) vorgesehen ist,
dadurch gekennzeichnet, das die beiden Endstücke der Hohlrippe (20) derart abgeschnitten sind, daß an den beiden Enden des Schlauches Abschnitte mit kreisringförmigem Profil gebildet sind, an denen jeweils ein Leitungsverbinder (X oder Y) angebracht ist, der mit der Erdung (12') verbunden ist.

2. Schlauch nach Anspruch 1,
bei dem die Hohlrippe einstückig mit der äußeren Schicht aus einem thermoplastischen Elastomer gebildet ist.

3. Schlauch nach Anspruch 1,
bei dem die Hohlrippe eine langgestreckte Mittelrille aufweist.

4. Schlauch nach Anspruch 1,
bei dem die Hohlrippe einen langgestreckten Schlitz zur Bildung einer offenen Rille aufweist, die sich über die Länge der Hohlrippe erstreckt, so daß die langgestreckte Leitung wie z. B. ein elektrisches Kabel durch den Schlitz hindurch in die Rille einzusetzen ist.

5. Schlauch nach Anspruch 3,
bei dem die Hohlrippe eine sich über ihre Länge erstreckende Aussparung aufweist, die bei Bedarf in einfacher Weise zur Bildung einer langgestreckten offenen Rille durch ein Messer aufzuschneiden ist.

6. Schlauch nach einem der Ansprüche 1 bis 5,
der ein Paar gegenüberliegende Hohlrippen aufweist, die sich jeweils über seine Länge erstrecken, wobei eine der Hohlrippen einen langgestreckten Schlitz zur Bildung einer sich über ihre Länge erstreckenden offenen Rille aufweist, die zum Verbinden mit einem weiteren Schlauch, der mindestens eine gleichgebildete Rippe aufweist, mittels einer langgestreckten Verbindung dient, die zwei langgestreckte Stege und ein Gewebe aufweist, das die Stege derart verbindet, daß jeder der Stege durch den Schlitz in die Hohlrippe über deren Länge einzusetzen ist.

7. Schlauch nach einem der Ansprüche 1 bis 6,
bei des ein Teil der Hohlrippen von dem Schlauch an dessen Endabschnitten abgeschnitten ist, an denen der Schlauch mit Leitungsverbindern verbunden ist.

## Revendications

1. Flexible d'alimentation en carburant, comportant une couche interne (11) en caoutchouc résistant aux huiles, formant un organe tubulaire, une couche de renforcement (12) en fibres tissées située sur ladite couche interne, une nappe tissée métallique (12') servant de moyen de mise à la terre située entre ladite couche interne et ladite couche de renforcement, une couche intermédiaire (13) en caoutchouc résistant aux intempéries située sur ladite couche de renforcement, et une couche extérieure de recouvrement (14) en élastomère thermoplastique située sur ladite couche intermédiaire, la couche extérieure de recouvrement (14) comportant une nervure creuse allongée (20) dans laquelle un sillon central (21) s'étendant longitudinalement est prévu pour recevoir un fil électrique (EW), caractérisé en ce que les deux parties d'extrémité de la nervure creuse (20) sont coupées pour fournir des parties à profil circulaire aux deux extrémités du flexible auxquelles un raccord (X ou Y) est fixé, de manière à relier les raccords au moyen de mise à la terre (12').

2. Flexible selon la revendication 1, dans lequel la nervure creuse est intégrée à la couche extérieure en élastomère thermoplastique.

3. Flexible selon la revendication 1, dans lequel la nervure creuse présente un sillon central allongé.

4. Flexible selon la revendication 1, dans lequel la nervure creuse présente une fente allongée de manière à former un canal ouvert s'étendant le long d'elle, et de telle sorte que la ligne allongée telle qu'un fil électrique puisse y être insérée par la fente.

5. Flexible selon la revendication 3, dans lequel la nervure creuse est configurée avec une entaille allongée s'étendant sur, et le long de la nervure, de manière à ce que l'entaille allongée puisse être facilement coupée à la lame lorsque c'est nécessaire, pour former un canal ouvert allongé.

6. Flexible selon l'une quelconque des revendications 1 à 5, qui est configuré avec une paire de nervures creuses qui s'étendent sur sa longueur, opposées, dont l'une présente une fente allongée de manière à former un canal ouvert qui s'étend sur sa longueur, pour la liaison à un autre flexible, qui est configuré avec au moins une nervure similaire, au moyen d'un raccord allongé présentant deux parties de tige allongées et une partie d'âme reliant les parties de tige de manière à ce que chacune des parties de tige s'insère dans la nervure creuse, en passant par la fente.

7. Flexible selon l'une quelconque des revendications 1 à 6, dans lequel une partie des nervures creuses est découpée du flexible à des parties d'extrémité de celui-ci où le flexible est relié à des raccords.
